# EUROPEAN PATENT SPECIFICATION

(11) **EP 3 767 171 B1**
(45) Date of publication and mention of the grant of the patent: **07.06.2023**
(21) Application number: 20184079.0
(22) Date of filing: 03.07.2020
(51) Int. Cl.: F22B 1/02, F22B 1/18, F22B 5/04

(54) **ASSEMBLY AND STEAM GENERATING ARRANGMENT COMPRISING SAID ASSEMBLY**
BAUGRUPPE UND DAMPFERZEUGUNGSANORDNUNG MIT BESAGTER BAUGRUPPE
ENSEMBLE ET AGENCEMENT DE GÉNÉRATION DE VAPEUR COMPRENANT LEDIT ENSEMBLE

(30) Priority: 05.07.2019 SE 1950852
(43) Date of publication of application: 20.01.2021
(73) Proprietor: Ztimur AB, 187 54 Täby (SE)
(72) Inventor: PETTERSSON, Jens, 242 00 Hörby (SE); WIGARDT, Tommy, 268 78 KÅGERÖD (SE); EKEBACKE, Eric, 132 44 Saltsjö-boo (SE); CARLSSON, Ola, 135 34 Tyresö (SE)
(74) Representative: Bergenstråhle & Partners AB

(56) References cited:
- WO-A1-2011/131834
- WO-A2-2007/114775
- CH-A- 558 916
- GB-A- 734 169
- US-A1- 2014 345 545

## Description

### TECHNICAL FIELD

The arrangements herein relate to the field of stream generation, which, for example, may be used for cleaning of ventilation ducts or the like. In particular, an assembly for mounting in a steam generating arrangement and a steam generating arrangement comprising said assembly are disclosed.

### BACKGROUND

Within the field of stream generation, a particular use concerns the cleaning of ventilation ducts in buildings. Ventilation ducts that transport air from kitchen areas, or other areas, typically transport a quantity of fat vapour or droplets with the air flow from these areas. The fat accumulates on the inner surfaces of the ventilation ducts and cleaning thereof may be required, for example for safety reasons or for ventilation efficiency reasons. Safety reasons refer to that the accumulated fat may, in worst case scenarios, ignite if the temperature is high enough. Ventilation efficiency reasons refer to that air flow in the ventilation duct will typically be reduced as a result of the fat accumulated on the inner walls of the ventilation ducts.

WO2007114775 discloses a method for producing a gaseous medium comprising steam, said steam being produced from a first fluid medium, energy for heating the first fluid medium being provided by burning a fuel, comprising the steps of mixing the steam with exhaust gas from combustion of said fuel characterised by the steps of prior to mixing the steam with exhaust gas, injecting fluid into the steam. Moreover, a device for producing a gaseous medium is disclosed. A disadvantage may be that the method and device work less efficiently, or not at all, after some time of use, i.e. the amount of gaseous medium produced per unit time decreases or even ceases over time.

### SUMMARY

An object may be to mitigate, or eliminate, the abovementioned disadvantage, or other disadvantages or problems.

According to an aspect, this object is achieved by an assembly for mounting in a steam generating arrangement for generating steam according to claim 1.

The assembly comprises a pressure vessel comprising an inlet and an outlet, a heat exchanging unit arranged to convey heated water in liquid phase to the inlet and connected to the inlet, and a closing unit adapted to be biased to close the outlet.

The pressure vessel comprises an outlet portion and an inlet portion. The outlet portion comprises a chamber that is connected to the outlet. A first tube is fixed to and extends from the chamber into the inlet portion. The first tube may extend into the chamber. The first tube partially encloses a second tube. The second tube extends further into the inlet portion than the first tube. A gap, such as an annular gap or the like, is formed between the first tube and the second tube.

In some examples, the second tube may in addition extend into the chamber, e.g. further into the chamber than the first tube if the first tube actually extends into the chamber. Thus, the first tube may or may not extend into the chamber.

The second tube may be longer than the first tube, i.e. the length of the second tube is greater than the length of the first tube.

In some embodiments, the second tube is provided with at least one through-opening, such as a slit, cut-out, through-hole or the like, for dispensing water in liquid phase into the chamber. Said at least one through-opening is located at a portion of the second tube that is within the chamber.

In some embodiments, said at least one through-opening comprises one or more of a slit preferably extending from an end of the second tube, a set of through-holes, preferably having cross-sectional shapes that are at least one of oval and polygonal, and the like.

Said at least one through-opening may extend in the direction of the longitudinal axis of the second tube and/or in a direction at an angle to the longitudinal axis. The angle may be between 90 degrees and 0 degrees as deemed fit for a particular application.

In some embodiments, the closing unit comprises a body portion arranged to be tightly received by the outlet of the pressure vessel. The body portion preferably comprises a protrusion adapted to extend at least partly into the outlet of the pressure vessel and into the pressure vessel. The protrusion more preferably is arranged to guide the body portion when the pressure in the pressure vessel causes the closing unit to be displaced. Most preferably a cross-section of the protrusion comprises at least three legs extending towards an inner surface of the outlet of the pressure vessel.

In some embodiments, the closing unit comprises a spring valve biased to close the outlet of the pressure vessel.

In some embodiments, the heat exchanging unit comprises a water supply loop arranged to windingly enclose at least a portion of the pressure vessel. The water supply loop preferably has a helical shape. The water supply loop may further windingly enclose said at least a portion of the pressure vessel while presenting a zig-zag shape or the like.

In some embodiments, the heat exchanging unit is provided with heat conducting flanges for transferring heat to water conveyed by the heat exchanging unit.

In some embodiments, the pressure vessel is elongated, preferably in the longitudinal direction of the first tube and/or the longitudinal direction of the second tube.

According to another aspect, this object is achieved by a steam generating arrangement for generating steam according to claim 9.

The steam generating arrangement comprises a housing that has a housing inlet for receiving a flow of air and that has a housing outlet for connection to a duct to be cleaned, and a fan or other air supply means arranged to provide the flow of air into the housing inlet.

The housing encloses a hollow shield connecting to the housing outlet at a first opening of the hollow shield. Moreover, the hollow shield comprises a second opening for receiving the flow of air. A guiding passage is formed between the housing and the hollow shield. The guiding passage is arranged to guide the flow of air from the housing inlet to the second opening of the hollow shield. The hollow shield further comprises an assembly according to the aspect described above. The housing further comprises a heating device arranged to heat the assembly.

In some embodiments, the heating device is at least partially surrounded by the hollow shield.

It may be that the build-up of deposits on inner surfaces of the assembly are reduced, or even eliminated, thanks to the cavities, such as the chamber, the inlet portion of the pressure vessel, the heat exchanging device, do not become completely empty of water in liquid phase, i.e. all water particles are not vaporized in these cavities, during operation, i.e. when steam is generated.

Therefore, an advantage of the embodiments herein is that increased time of operation, e.g. in comparison to existing solutions for generating steam, is expected.

### BRIEF DESCRIPTION OF THE DRAWINGS

The various aspects of embodiments disclosed herein, including particular features and advantages thereof, will be readily understood from the following detailed description and the accompanying drawings, which are briefly described in the following.
Figure 1 is a cross-sectional view of an exemplifying steam generating arrangement according to the embodiments herein.
Figure 2 is a cross-sectional view of an exemplifying assembly according to the embodiments herein.
Figure 3 includes side views of exemplifying embodiments of the second tube.
Figure 4 includes different plan views of an exemplifying closing unit.
Figure 5 includes side views and views along the longitudinal direction of the elongated pressure vessel, illustrating exemplifying heat exchanging units.

### DETAILED DESCRIPTION

Throughout the following description, similar reference numerals have been used to denote similar features, such as modules, parts, items, elements, units or the like, when applicable. Crosshatched areas indicate material of various features, as opposed to passages, empty volumes etc.

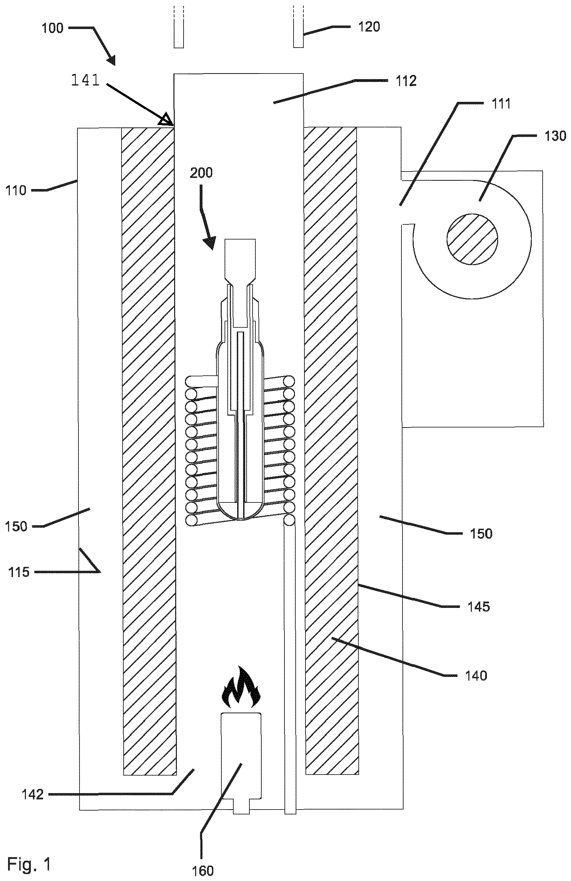

**Figure 1** depicts an exemplifying steam generating arrangement 100 for generating a flow of steam, which is a gaseous medium comprising a mixture of water droplets and/or steam and/or air. The steam generating arrangement 100 comprises a housing 110 that has a housing inlet 111 for receiving a flow of air and that has a housing outlet 112 for connection to a duct 120 to be cleaned, and an air supply such as a fan 130 arranged to provide the flow of air into the housing inlet 111. The housing outlet 112 is adaptable for connection to the duct 120, which for example may have a circular cross-section and a diameter of 2 to 40 cm, preferably 3 to 20 cm, most preferably 5 to 15 cm, about 8 cm or the like. The housing outlet 112 may further be adaptable for connection to ducts having other cross-sections, such as rectangular, oval, polygon-shaped or the like.

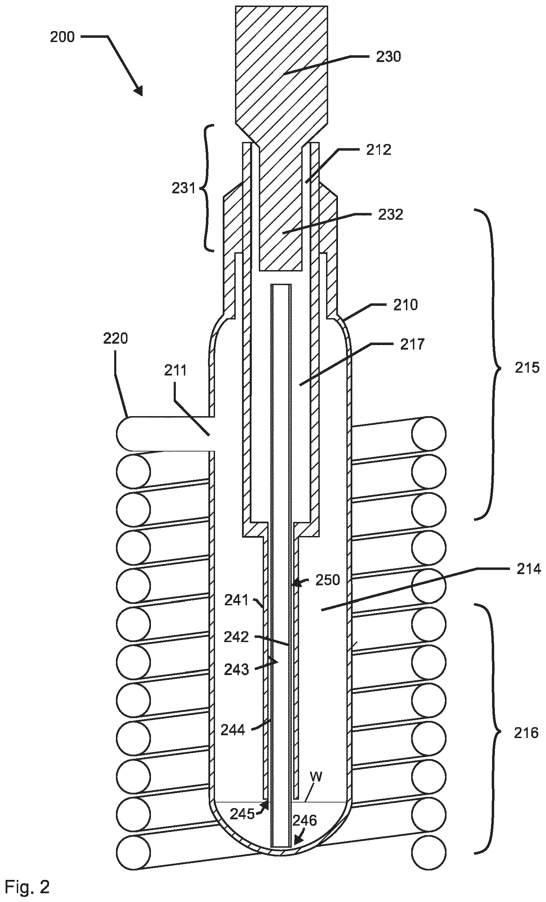

The housing 110 encloses a hollow shield 140 connecting to the housing outlet 112 at a first opening 141 of the hollow shield 140. The hollow shield 140 may be made of stone, cement, bricks, tile, concrete or other suitable material that withstands heat and/or insulates from heat. The hollow shield 140 comprises a second opening 142 for receiving the flow of air. A guiding passage 150 is formed between the housing 110 and the hollow shield 140, i.e. between an inner surface 115 of the housing 110 and an outer surface 145 of the hollow shield 140. The guiding passage 150 is arranged to guide the flow of air from the housing inlet 111 to the second opening 142 of the hollow shield 140. The housing 110 and/or the hollow shield 140 may be elongated. Moreover, the hollow shield 140 comprises an assembly 200 as illustrated in more detailed with reference to Figure 2 below. The housing 110 further comprises a heating device 160 arranged to heat the assembly 200.

The heating device 160 may be a burner, e.g. connected to a supply of gas, propane, butane, fuel oil, an electric heater or the like. A heat level of the heating device 160 is adapted to ensure that water in liquid phase is expelled into the compartment 214 during operation. Exemplifying heat levels may preferably be 10 - 50 kW, more preferably 20-40 kW, most preferably about 30 kW or the like depending desired mixture of liquid and vaporized water expelled from the pressure vessel 210.

In more detail, the steam generating arrangement 100 may generate a gaseous medium, comprising a mixture of water vapor and/or water droplets and/or air and possibly some exhaust gas from the heating device 160 when applicable.

In some embodiments, the heating device 160 is at least partially surrounded by the hollow shield 140.

**Figure 2** illustrates an exemplifying assembly 200 for mounting in the steam generating arrangement 100 of Figure 1.

The assembly 200 comprises a pressure vessel 210 comprising an inlet 211 and an outlet 212, a heat exchanging unit 220 arranged to, such as adapted to, convey heated water in liquid phase to the inlet 211 and connected to the inlet 211, and a closing unit 230 adapted to be biased to close the outlet 212, i.e. the closing unit 230 may be said to be arranged to be biased towards a closed position, in which the outlet 212 is closed by the closing unit 230. When the closing unit 230 is in an open position, the outlet 212 is at least partially open, whereby steam and/or water in liquid phase may be allowed to pass out of the pressure vessel 210 and through the outlet 212 into the duct 230.

The pressure vessel 210 comprises an outlet portion 215 and an inlet portion 216. The outlet portion 215 comprises a chamber 217 that is connected to the outlet 212. The pressure vessel 210 may comprise a compartment 214, which may be arranged to receive water in liquid phase from the inlet 211 during operation.

In more detail, the heating device 160, mentioned in relation to Figure 1, may be arranged to heat the heat exchanging device 210 of the assembly 200 and the pressure vessel 210 of the assembly 200. However, in other examples, it may be that the heating device 160 comprises a first heating device for heating of the heat exchanging device 210 and a second heating device for heating of the pressure vessel 210.

A first tube 241 is fixed to and extends from the chamber 217 into the inlet portion 216. The first tube 241 partially encloses a second tube 242. The first and second tubes 241, 242 may be channels, pipes, lines for transporting fluid, or the like. Preferably the first and second tubes 241, 242 are concentric, i.e. they share a common central, longitudinal axis.

The pressure vessel 210 may be elongated, preferably in a longitudinal direction of the first tube 241 and/or a longitudinal direction of the second tube 242.

The second tube 242 extends further into the inlet portion 216 than the first tube 241. The compartment 214 and the chamber 217 are connected to each other via the first and second tubes 241, 242. A gap 250 is formed between an inner surface 243 of the first tube 241 and an outer surface 244 of the second tube 242. A purpose of the gap 250 is to create a passage for transportation of steam from the compartment 214 to the chamber 217.

In the example shown here the second tube 242 extends into the chamber 217 but in other examples of the invention it may be shorter and only extend part of the way to the chamber 217.

In one example of the invention, the first and second tubes 241, 242 have circular cross-sections, e.g. the inner diameter of the first tube 241 may be 11 mm and the outer diameter of the second tube 242 may be 10 mm. Expressed differently, the distance between the outer surface 244 of the second tube 242 and the inner surface 243 of the first tube 214 is 1 mm, or the cross-sectional area of the gap between the first and second tubes 241, 242 is about 66 square millimetres (mm). Said distance between the outer surface 244 of the second tube 242 and the inner surface 243 of the first tube 241 may be 0.1 to 5 mm, preferably 0.2 to 3 mm, most preferably 0.7 to 2 mm or about 1 mm. Other values may be used depending on application. However, in other examples, the cross-sections of the first and second tubes 241, 242 may be rectangular, quadratic, oval, triangular, pentagon-shaped, polygon-shaped, star-shaped or the like. According to still further examples, the cross-sections of the first and second tubes 241, 242 may be different in terms of their shape. Moreover, the cross-sectional shapes of the first and/or second tubes 241, 242 may at least to some extent vary along the length(s) thereof. Generally, the cross-sectional area of the gap between the first and second tubes 241, 242 may preferably be based on the cross-sections corresponding to the different exemplifying values of the distance between the outer surface 244 of the second tube 242 and the inner surface 243 of the first tube 241.

In the example of Figure 2, the second tube 242 rests at or is in close proximity to the bottom of the pressure vessel 210. The bottom of the pressure vessel 210 is located in the inlet portion 216. In other examples, the second tube 242 may be fixedly arranged, e.g. by moulding, glue or other attachment means, while being partly enclosed by the first tube 241. The second tube 242 may be fixedly arranged to one or more of the bottom of the pressure vessel 210, the inner surface 243 of the first tube 241 and any other suitable fixation point. A distance from the bottom of the pressure vessel 210 to the first tube 241, i.e. to a point of the first tube 241 that is closest to the bottom, may be 1-10 cm, preferably 2-5 cm, most preferably approximately 2 cm. A purpose of this distance is to ensure that a volume of water in liquid phase remains present in the pressure vessel 210 at all times during operation.

As mentioned, the second tube 242 may further be concentrically arranged with respect to the first tube 241. As mentioned, the cross-sections of the first and second tubes 241, 242 may be circular, in which case the gap 250 may be 0.1 mm - 5 mm, preferably 0.2 - 3 mm, most preferably 0.7 - 2 mm or about 1 mm.

With the embodiments herein, the gap 250 is formed between the first and second tubes 241, 242. Moreover, the first and second tubes 241, 242 may be arranged to allow the gap 250 to be uncovered while an inlet 246 to the second tube 242 is still covered with respect to a level of water in liquid phase, which can be gathered in the inlet portion 216 of the pressure vessel 217. The inlet 246 of the second tube 242 is located in the inlet portion 216 of the pressure vessel 210.

According to further examples, a distal end of the second tube 242, at which the inlet 246 is located, may be shaped to facilitate flow of water in liquid phase into the second tube 242. The distal end is distal with respect to the outlet portion of the pressure vessel 210. Hence, a proximal end of the second tube 242, that is opposite to the distal end, is located within the outlet portion of the pressure vessel 210.

Alternatively or additionally, the bottom of the second tube 242 may be provided with one or more protrusions or holes, which are arranged to facilitate flow of water in liquid phase into the second tube 242.

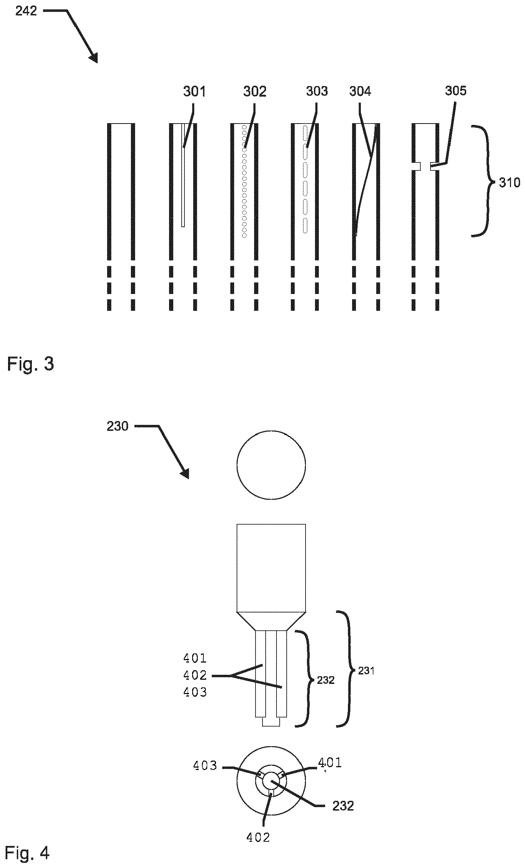

As shown in **Figure 3****,** the second tube 242 may be provided with at least one through-opening 301-305 for dispensing water in liquid phase into the chamber 217. Said at least one though-opening 301-305 is located at a portion 310 of the second tube 242 that is within enclosed by the chamber 217.

Thanks to said at least one through-opening 301-305, water in liquid phase transported into the chamber is distributed more evenly in said chamber. Thus, improving generated flow of steam.

In some embodiments, said at least one through-opening 301-305 comprises one or more of:
- a slit 301 preferably extending from an end of the second tube 242,
- a set of through-holes 302, 303, preferably having cross-sectional shapes that are at least one of oval, polygonal, circular, rectangular, triangular, elliptical, etc., wherein the set of through-holes 302, 303 extend in the direction of the longitudinal axis of the second tube and/or in a direction at an angle to the longitudinal axis. The angle may be between 90 degrees and 0 degrees as deemed fit for a particular application,
- and the like.

The closing unit 230 is biased by a preset force towards a closed position, in which the outlet 212 of the pressure vessel 210 is closed. Thanks to the closing unit 230 being biased closed by a preset force a maximum pressure referred to as a chamber pressure may be achieved within the chamber 217. The outlet 212 may preferably have a cross-section of 200 - 800 mm², more preferably 400 - 600 mm², more preferably about 500 mm² or the like. A cross-section of about 500 mm² roughly corresponds to an inner diameter of 25 mm for the outlet 212.

Should pressure in the chamber 217 exceed the chamber pressure, the closing unit 230 can no longer remain, thanks to the biasing thereof, in the closed position and thus assumes the open position until the pressure in the chamber 217 reaches or undershoots the chamber pressure. In the open position of the closing unit 230, the outlet 212 of the pressure vessel 210 is open.

According to some embodiments, illustrated in **Figure 4****,** the closing unit 230 comprises a body portion 231 of a preset mass arranged to be tightly received by the outlet 212 of the pressure vessel 210. This may mean that the closing unit 230 is embodiment in the form of a plug, e.g. made of metal, steel, or the like. The body portion 231 preferably comprises a protrusion 232 adapted to
extend at least partly into the outlet 212 of the pressure vessel 210 and into the pressure vessel 210. The protrusion 232 is more preferably arranged to guide the body portion 231 when the pressure in the pressure vessel 210 causes the closing unit 230 to be displaced. Most preferably, a cross-section of the protrusion 232 comprises at least three legs 401-403 extending towards an inner surface of the outlet 232 of the pressure vessel 210. These at least three legs may be formed by three longitudinal grooves milled into the protrusion 232.

In some embodiments, the closing unit 230 comprises a spring valve biased to close the outlet 212 of the pressure vessel 210. The closing unit 230, such as the spring valve, is adapted to allow a flow of water, in liquid and/or vaporized phase, through the outlet 212 when the pressure in the chamber 217 exceeds the chamber pressure.

The maximum pressure may be fixed or adjustable. For example, the mass of the closing unit - when realized as a plug - may be adjusted, whereby the maximum pressure is dependent on the weight. The mass of the plug may be 100-1000 g, preferably 200-800 g, most preferably about 600 g. The required mass of the plug is determined by the maximum pressure and the cross-sectional area which it plugs.

In some embodiments, the heat exchanging unit 220 thus comprises a water supply tube 221, 222 arranged to windingly enclose at least a portion of the pressure vessel 210. The water supply tube 221 preferably has a helical shape. The cross-section of the tube may be circular, rectangular, quadratic, oval, triangular, pentagon-shaped, polygon-shaped, star-shaped or the like. The water supply tube 221, 222 is adapted to transport water in liquid phase to the inlet 211 of the pressure vessel 210, e.g. the length of the water supply tube is adapted to ensure that water in liquid phase is expelled at the inlet 211 rather than vaporized water. This means for example that for a certain heat level provided by the heating device 160 there may be a maximum length of the water supply loop. Should the maximum length of the water supply loop be exceeded, it is expected that vaporized water is fed into the pressure vessel 210 during operation. This would not be desired. It may be that the longer the water supply loop is the lower the heat level of the heating device 160 shall be.

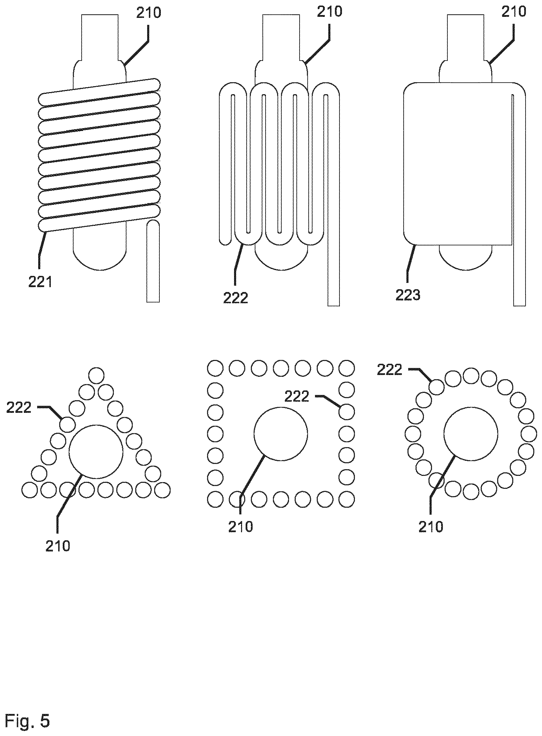

**Figure 5** schematically illustrates, various embodiments of the heat exchanging unit 220. To the left in the upper portion of Figure 5, the helically shaped water supply tube 221 is illustrated.

In the middle in the upper portion of Figure 5, the water supply tube 222 may present a zigzag path, e.g. zigzagging in the longitudinal direction of the pressure vessel 210, while encircling the pressure vessel 210.

As shown in the lower portion of Figure 5, the tubes of the water supply tube 22 may present any one of a triangle, a rectangle, a square, a circle and the like, in a cross-section, e.g. taken perpendicularly to the longitudinal direction of the pressure vessel 210. If the helically shaped water supply 221 is not strictly helical, it may also present any one of a triangle, a rectangle, a square, a circle and the like, in said cross-section.

To the right in the upper portion of Figure 5, an example of the heat changing unit 220 is illustrated. Here, the heat exchanging unit 220 is formed as a double-walled jacket 223, which at least partially enclosed the pressure vessel 210. Within the double-walls of the double-walled jacket 223 water in liquid phase will pass and flow into the pressure vessel 210 during operation. The double-walled jacket 223 may or may not be arranged to fit the pressure vessel 210 tightly. It may be preferred that there is a passage between the inner surface of the double-walled jacket 223 and the outer surface of the pressure vessel 210.

In some embodiments, the heat exchanging unit 220 is provided with heat conducting flanges for transferring heat to water conveyed by the heat exchanging unit 220.

When operating the steam generating arrangement 100, water is supplied to the steam generating arrangement 100, i.e. to the heat exchanging device, from an external source, such as any regular water tap or a water tank or the like. During operation, the steam generating arrangement 100 is typically positioned vertically, e.g. the longitudinal direction of the steam generating arrangement 100 is vertically oriented.

The pressure of the water supplied from the external source may for example be between 2-10 bars, preferably 4-9 bars, more preferably 5-8 bars, most preferably about 7 bar. Furthermore, an exemplifying flow of the water supplied from the external source may be about 0.2 l/s (liters per second).

In more detail, the heating device 160 and/or the heat exchanging unit 220 is/are adapted to pass water in liquid phase into the pressure vessel 210, e.g. through the inlet 211 thereof. Accordingly, pre-heated water in liquid phase flows into the pressure vessel 210 during operation.

Moreover, the heating device 160 is run to such extent that water, within the assembly 200, is partly vaporized. In particular, this means that some of the water in liquid phase gathering in the compartment 214, typically in the inlet portion 216, is vaporized thanks to heat from the heating device 160.

The vaporized water, i.e. steam, is confined within the pressure vessel 210, in particular within the compartment 214, until a water level W, see Figure 2, in the assembly 200 is forced towards the inlet 245 of the first tube 241 and reveals the inlet 245. Thus, the gap 250 is uncovered and steam passes from the compartment 214, through the gap 250 and into the chamber 217. It may also be that some water in liquid phase is pushed through the gap 250 initially, i.e. when the gap 250 is revealed. In this manner, the pressure in the compartment 214 decreases, whereby the water level W again covers the gap 250. Consequently, the water level W repeatedly covers and uncovers the gap 250, e.g. according to a repetitive pattern. The water level W may vary quickly, and seemingly stabilizing at a level where the gap 250 is just about to be uncovered and/or just about to be covered.

The length of the second tube 242 may be adapted to ensure that a compartment pressure, i.e. a maximum pressure in the compartment 214 at which steam begins to rise in the gap 250, is less than the maximum pressure.

The compartment 214 may thus comprise at least some parts of the inlet portion 216, e.g. those parts outside the chamber 217 and the first tube 241. Expressed differently, the compartment 214 is comprised in the pressure vessel 210 and extends, or reaches, from the inlet 211 of the pressure vessel 210 to the inlet 245 of the first tube 241 and to the inlet 246 of the second tube 242.

As the water is not completely vaporized within the compartment 214 build-up of deposits in the assembly 200 is greatly reduced. This may allow for continuous operation of the steam generating arrangement during long periods of time. Cleaning of an exemplifying duct may require an operation time of about 0.5 hours to 5 hours, typically 1 hour. Expected lifetime of the arrangement for generating steam may be 10 years, 3000 hours or the like.

To achieve various mixtures of liquid water and vaporized water in the gaseous medium provided by the steam generating arrangement 100 the heat level of the heating device 160 may be varied, flow of water into the heat exchanging unit 220 from the external source may be varied, air flow provided by the fan 130 may be varied and the like.

As described above, a pressure difference between the compartment 214 and the chamber 217 is achieved. The pressure difference causes water in liquid phase to be substantially continuously transported through the second tube 242 from the inlet 246 to the chamber 217 located in the outlet portion 215.

In the chamber 217, that mainly holds a mixture of liquid and vaporized water, a chamber pressure higher than an air pressure in the surrounding air, such as in the duct 120, prevails. The chamber pressure is achieved by the closing unit 230. In principle, this means that the closing unit 230 is adapted to be closed when a current pressure in the chamber 217 is less than the chamber pressure and to be open when the current pressure in the chamber 217 is greater than the chamber pressure.

As a result, any mixture of steam/water droplets passing through the outlet 212 expands. Thus, since said mixture of steam/water droplets may be considered to be in thermal equilibrium, at least a portion of the water droplets will be vaporized when released from the chamber 217 that has a higher pressure than outside the pressure vessel 217, e.g. at the outside of the closing unit 230, e.g. in the duct 230. Furthermore, a purpose of the hollow shield 140 may also be to provide a hot surface at which some of the water droplets, in liquid phase and expelled at the outlet 212, may land and vaporize.

Further, due to expansion of said mixture, a flow of said mixture out of the chamber 217 is generated.

As used herein, the terms "first", "second", "third" etc. may have been used merely to distinguish features, apparatuses, elements, units, or the like from one another unless otherwise evident from the context.

As used herein, the term "set of" may refer to one or more of something. E.g. a set of devices may refer to one or more devices, a set of parameters may refer to one or more parameters or the like according to the embodiments herein.

As used herein, the expression "in some embodiments" has been used to indicate that the features of the embodiment described may be combined with any other embodiment disclosed herein whenever technically feasible.

Each embodiment, example or feature disclosed herein may, when physically possible, be combined with one or more other embodiments, examples, or features disclosed herein.

## Claims

1. An assembly (200) for mounting in a steam generating arrangement (100) for generating steam, wherein the assembly (200) comprises:
a pressure vessel (210) comprising an inlet (211) and an outlet (212),
a heat exchanging unit (220), in which exhaust gases of a heating device (160) heat water, arranged to convey the heated water in liquid phase to the inlet (211) and connected to the inlet (211), and
a closing unit (230) adapted to be biased to close the outlet (212),
wherein the pressure vessel (210) comprises an outlet portion (215), an inlet portion (216), and a compartment (214) arranged to receive water in liquid phase from the inlet (211) during operation, wherein a bottom of the pressure vessel (210) is located in the inlet portion (216)
wherein the outlet portion (215) comprises a chamber (217) that is connected to the outlet (212), wherein the compartment (214) comprises at least some parts of the inlet portion (216) that are outside the chamber (217), **characterized in that** the compartment (215) further comprises a first tube (241), wherein the first tube (241) is fixed to and extends from the chamber (217) into the inlet portion (216), wherein the first tube (241) partially encloses a second tube (242), wherein the compartment (214) and the chamber (217) are connected to each other via the first and second tubes (241, 242), wherein the second tube (242) extends further into the inlet portion (216) than the first tube (241), wherein a gap (250) is formed between the first tube (241) and the second tube (242).

2. The assembly (200) according to claim 1, wherein the second tube (242) is provided with at least one through-opening (301-305) for dispensing water in liquid phase into the chamber (217), wherein said at least one though-opening (301-305) is located at a portion (310) of the second tube (242) that is within the chamber (217).

3. The assembly (200) according to claim 2, wherein said at least one through-opening (301-305) comprises one or more of:
- a slit (301) preferably extending from an end of the second tube (242), and
- a set of through-holes (302, 303), preferably having cross-sectional shapes that are at least one of oval and polygonal.

4. The assembly (200) according to any one of claims 1-3, wherein the closing unit (230) comprises a body portion (231) arranged to be tightly received by the outlet (212) of the pressure vessel (210), wherein the body portion (231) preferably comprises a protrusion (232) adapted to extend at least partly into the outlet (212) of the pressure vessel (210) and into the pressure vessel (210), wherein the protrusion (232) more preferably is arranged to guide the body portion (231) when the pressure in the pressure vessel (210) causes the closing unit (230) to be displaced, wherein most preferably a cross-section of the protrusion (232) comprises at least three legs (401-403) extending towards an inner surface of the outlet (232) of the pressure vessel (210).

5. The assembly (200) according to any one of claims 1-4, wherein the closing unit (230) comprises a spring valve biased to close the outlet (212) of the pressure vessel (210).

6. The assembly (200) according to any one of claims 1-5, wherein the heat exchanging unit (220) comprises a water supply tube arranged to windingly enclose at least a portion of the pressure vessel (210), wherein the water supply tube preferably has a helical shape.

7. The assembly (200) according to any one of claims 1-6, wherein the heat exchanging unit (220) is provided with heat conducting flanges for transferring heat to water conveyed by the heat exchanging unit (220).

8. The assembly (200) according to any one of claims 1-7, wherein the pressure vessel (210) is elongated, preferably in a longitudinal direction of the first tube (241) and/or a longitudinal direction of the second tube (242).

9. A steam generating arrangement (100) for generating steam, wherein the steam generating arrangement (100) comprises:
a housing (110) that has a housing inlet (111) for receiving a flow of air and that has a housing outlet (112) for connection to a duct (120) to be cleaned, and
a fan (130) arranged to provide the flow of air into the housing inlet (111),
wherein the housing (110) encloses a hollow shield (140) connecting to the housing outlet (112) at a first opening (141) of the hollow shield (140), wherein the hollow shield (140) comprises a second opening (142) for receiving the flow of air, wherein a guiding passage (150) is formed between the housing (110) and the hollow shield (140), wherein the guiding passage (150) is arranged to guide the flow of air from the housing inlet (111) to the second opening (142) of the hollow shield (140),
wherein the hollow shield (140) comprises an assembly (200) according to any one of claims 1-8,
wherein the housing (110) comprises a heating device (160) adapted to generating exhaust gases for heating water in the heat exchanging unit (220) and arranged to heat the assembly (200).

10. The steam generating arrangement (100) according to claim 9, wherein the heating device (160) is at least partially surrounded by the hollow shield (140).

## Patentansprüche

1. Baugruppe (200) zur Montage in einer Dampferzeugungsanordnung (100) zur Erzeugung von Dampf, wobei die Baugruppe (200) umfasst:
einen Druckbehälter (210), der einen Einlass (211) und einen Auslass (212) umfasst,
eine Wärmetauschereinheit (220), in der Abgase einer Heizvorrichtung (160) Wasser erwärmen, die eingerichtet ist, um das erwärmte Wasser in flüssiger Phase zum Einlass (211) zu befördern, und die mit dem Einlass (211) verbunden ist, und
eine Schließeinheit (230), die dazu ausgelegt ist, vorgespannt zu werden, um den Auslass (212) zu schließen,
wobei der Druckbehälter (210) einen Auslassabschnitt (215), einen Einlassabschnitt (216) und ein Fach (214) umfasst, das angeordnet ist, um Wasser in flüssiger Phase aus dem Einlass (211) während des Betriebs aufzunehmen, wobei ein Boden des Druckbehälters (210) sich im Einlassabschnitt (216) befindet
wobei der Auslassabschnitt (215) eine Kammer (217) umfasst, die mit dem Auslass (212) verbunden ist, wobei das Fach (214) zumindest einige Teile des Einlassabschnitts (216) umfasst, die außerhalb der Kammer (217) liegen, **dadurch gekennzeichnet, dass** das Fach (215) weiter ein erstes Rohr (241) umfasst, wobei das erste Rohr (241) an der Kammer (217) befestigt ist und sich von dieser in den Einlassabschnitt (216) erstreckt, wobei das erste Rohr (241) teilweise ein zweites Rohr (242) umschließt, wobei das Fach (214) und die Kammer (217) über das erste und das zweite Rohr (241, 242) miteinander verbunden sind, wobei sich das zweite Rohr (242) weiter in den Einlassabschnitt (216) erstreckt als das erste Rohr (241), wobei ein Spalt (250) zwischen dem ersten Rohr (241) und dem zweiten Rohr (242) ausgebildet ist.

2. Baugruppe (200) nach Anspruch 1, wobei das zweite Rohr (242) mit mindestens einer Durchgangsöffnung (301-305) zum Ausgeben von Wasser in flüssiger Phase in die Kammer (217) versehen ist, wobei sich die mindestens eine Durchgangsöffnung (301-305) an einem Abschnitt (310) des zweiten Rohrs (242) befindet, der sich innerhalb der Kammer (217) befindet.

3. Baugruppe (200) nach Anspruch 2, wobei die mindestens eine Durchgangsöffnung (301-305) eines oder mehrere umfasst von:
- einem Schlitz (301), der sich vorzugsweise von einem Ende des zweiten Rohrs (242) erstreckt, und
- einem Satz Durchgangslöcher (302, 303), die vorzugsweise Querschnittsformen aufweisen, die zumindest entweder oval oder polygonal sind.

4. Baugruppe (200) nach einem der Ansprüche 1-3, wobei die Schließeinheit (230) einen Körperabschnitt (231) umfasst, der eingerichtet ist, um von dem Auslass (212) des Druckbehälters (210) dicht aufgenommen zu werden, wobei der Körperabschnitt (231) vorzugsweise einen Vorsprung (232) umfasst, der dazu ausgelegt ist, sich zumindest teilweise in den Auslass (212) des Druckbehälters (210) und in den Druckbehälter (210) zu erstrecken, wobei der Vorsprung (232) bevorzugter eingerichtet ist, um den Körperabschnitt (231) zu führen, wenn der Druck in dem Druckbehälter (210) bewirkt, dass die Schließeinheit (230) verschoben wird, wobei besonders bevorzugt ein Querschnitt des Vorsprungs (232) mindestens drei Schenkel (401-403) umfasst, die sich zu einer Innenfläche des Auslasses (232) des Druckbehälters (210) erstrecken.

5. Baugruppe (200) nach einem der Ansprüche 1-4, wobei die Schließeinheit (230) ein Federventil umfasst, das vorgespannt ist, um den Auslass (212) des Druckbehälters (210) zu schließen.

6. Baugruppe (200) nach einem der Ansprüche 1-5, wobei die Wärmetauschereinheit (220) ein Wasserzuführungsrohr umfasst, das eingerichtet ist, um zumindest einen Abschnitt des Druckbehälters (210) wickelnd zu umschließen, wobei das Wasserzuführungsrohr vorzugsweise eine Schraubenform aufweist.

7. Baugruppe (200) nach einem der Ansprüche 1-6, wobei die Wärmetauschereinheit (220) mit wärmeleitenden Flanschen versehen ist, um Wärme auf das von der Wärmetauschereinheit (220) beförderte Wasser zu übertragen.

8. Baugruppe (200) nach einem der Ansprüche 1-7, wobei der Druckbehälter (210) länglich ist, vorzugsweise in einer Längsrichtung des ersten Rohres (241) und/oder in einer Längsrichtung des zweiten Rohres (242).

9. Dampferzeugungsanordnung (100) zum Erzeugen von Dampf, wobei die Dampferzeugungsanordnung (100) umfasst:
ein Gehäuse (110), das einen Gehäuseeinlass (111) zum Aufnehmen eines Luftstroms aufweist, und das einen Gehäuseauslass (112) zum Anschließen an einen zu reinigenden Kanal (120) aufweist, und
einen Lüfter (130), der eingerichtet ist, um den Luftstrom in den Gehäuseeinlass (111) bereitzustellen, wobei das Gehäuse (110) eine hohle Abschirmung (140) umschließt, die mit dem Gehäuseauslass (112) an einer ersten Öffnung (141) der hohlen Abschirmung (140) verbunden ist, wobei die hohle Abschirmung (140) eine zweite Öffnung (142) zum Aufnehmen des Luftstroms bildet, wobei ein Führungsdurchgang (150) zwischen dem Gehäuse (110) und der hohlen Abschirmung (140) ausgebildet ist,
wobei der Führungsdurchgang (150) eingerichtet ist, um den Luftstrom vom Gehäuseeinlass (111) zur zweiten Öffnung (142) der hohlen Abschirmung (140) zu führen, wobei die hohle Abschirmung (140) eine Baugruppe (200) nach einem der Ansprüche 1-8 umfasst,
wobei das Gehäuse (110) eine Heizvorrichtung (160) umfasst, die dazu ausgelegt ist, Abgase zum Erwärmen von Wasser in der Wärmetauschereinheit (220) zu erzeugen, und die dazu eingerichtet ist, die Baugruppe (200) zu erwärmen.

10. Dampferzeugungsanordnung (100) nach Anspruch 9, wobei die Heizvorrichtung (160) zumindest teilweise von der hohlen Abschirmung (140) umgeben ist.

## Revendications

1. Ensemble (200) destiné à être monté dans un agencement de génération de vapeur (100) pour générer de la vapeur, dans lequel l'ensemble (200) comprend :
un récipient sous pression (210) comprenant une entrée (211) et une sortie (212),
une unité d'échange de chaleur (220), dans laquelle des gaz d'échappement d'un dispositif de chauffage (160) chauffent de l'eau, agencée pour transporter l'eau chauffée en phase liquide vers l'entrée (211) et reliée à l'entrée (211), et
une unité de fermeture (230) adaptée pour être inclinée pour fermer la sortie (212),
dans lequel le récipient sous pression (210) comprend une partie de sortie (215), une partie d'entrée (216) et un compartiment (214) agencé pour recevoir de l'eau en phase liquide depuis l'entrée (211) pendant le fonctionnement, dans lequel un fond du récipient sous pression (210) est situé dans la partie d'entrée (216)
dans lequel la partie de sortie (215) comprend une chambre (217) qui est reliée à la sortie (212), dans lequel le compartiment (214) comprend au moins certaines parties de la partie d'entrée (216) qui sont à l'extérieur de la chambre (217), **caractérisé en ce que** le compartiment (215) comprend en outre un premier tube (241), dans lequel le premier tube (241) est fixé à et s'étend depuis la chambre (217) dans la partie d'entrée (216), dans lequel le premier tube (241) enferme partiellement un second tube (242), dans lequel le compartiment (214) et la chambre (217) sont reliés l'un à l'autre via les premier et second tubes (241, 242), dans lequel le second tube (242) s'étend plus loin dans la partie d'entrée (216) que le premier tube (241), dans lequel un espace (250) est formé entre le premier tube (241) et le second tube (242).

2. Ensemble (200) selon la revendication 1, dans lequel le second tube (242) est pourvu d'au moins une ouverture traversante (301-305) pour distribuer de l'eau en phase liquide dans la chambre (217), dans lequel ladite au moins une ouverture traversante (301-305) est située au niveau d'une partie (310) du second tube (242) qui se trouve à l'intérieur de la chambre (217).

3. Ensemble (200) selon la revendication 2, dans lequel ladite au moins une ouverture traversante (301-305) comprend un ou plusieurs parmi :
- une fente (301) s'étendant de préférence à partir d'une extrémité du second tube (242), et
- un ensemble de trous traversants (302, 303), présentant de préférence des formes de section transversale qui sont au moins une parmi ovale et polygonale.

4. Ensemble (200) selon l'une quelconque des revendications 1-3, dans lequel l'unité de fermeture (230) comprend une partie de corps (231) agencée pour être reçue de manière étanche par la sortie (212) du récipient sous pression (210), dans lequel le la partie de corps (231) comprend de préférence une saillie (232) adaptée pour s'étendre au moins partiellement dans la sortie (212) du récipient sous pression (210) et dans le récipient sous pression (210), dans lequel la saillie (232) est agencée plus préférentiellement pour guider la partie de corps (231) lorsque la pression dans le récipient sous pression (210) provoque le déplacement de l'unité de fermeture (230), dans lequel le plus préférentiellement une section transversale de la saillie (232) comprend au moins trois branches (401-403) s'étendant vers une surface intérieure de la sortie (232) du récipient sous pression (210).

5. Ensemble (200) selon l'une quelconque des revendications 1-4, dans lequel l'unité de fermeture (230) comprend une soupape à ressort sollicitée pour fermer la sortie (212) du récipient sous pression (210).

6. Ensemble (200) selon l'une quelconque des revendications 1-5, dans lequel l'unité d'échange de chaleur (220) comprend un tube d'alimentation en eau agencé pour enfermer en enroulement au moins une partie du récipient sous pression (210), dans lequel le tube d'alimentation en eau présente de préférence une forme hélicoïdale.

7. Ensemble (200) selon l'une quelconque des revendications 1-6, dans lequel l'unité d'échange de chaleur (220) est pourvue de brides conductrices de chaleur pour transférer la chaleur à l'eau transportée par l'unité d'échange de chaleur (220).

8. Ensemble (200) selon l'une quelconque des revendications 1-7, dans lequel le récipient sous pression (210) est allongé, de préférence dans une direction longitudinale du premier tube (241) et/ou une direction longitudinale du second tube (242).

9. Agencement de génération de vapeur (100) pour générer de la vapeur, dans lequel l'agencement de génération de vapeur (100) comprend :
un boîtier (110) qui présente une entrée de boîtier (111) pour recevoir un flux d'air et qui présente une sortie de boîtier (112) pour le raccordement à un conduit (120) à nettoyer, et
un ventilateur (130) agencé pour fournir le flux d'air dans l'entrée de boîtier (111), dans lequel le boîtier (110) renferme un écran creux (140) raccordé à la sortie de boîtier (112) au niveau d'une première ouverture (141) de l'écran creux (140), dans lequel l'écran creux (140) comprend une seconde ouverture (142) pour recevoir le flux d'air, dans lequel un passage de guidage (150) est formé entre le boîtier (110) et l'écran creux (140),
dans lequel le passage de guidage (150) est agencé pour guider le flux d'air depuis l'entrée de boîtier (111) vers la seconde ouverture (142) de l'écran creux (140), dans lequel l'écran creux (140) comprend un ensemble (200) selon l'une quelconque des revendications 1-8,
dans lequel le boîtier (110) comprend un dispositif de chauffage (160) adapté pour générer des gaz d'échappement pour chauffer l'eau dans l'unité d'échange de chaleur (220) et agencé pour chauffer l'ensemble (200).

10. Agencement de génération de vapeur (100) selon la revendication 9, dans lequel le dispositif de chauffage (160) est au moins partiellement entouré par l'écran creux (140).
